# EUROPÄISCHE PATENTSCHRIFT

(11) **EP 3 929 342 B1**
(45) Veröffentlichungstag und Bekanntmachung des Hinweises auf die Patenterteilung: **21.08.2024**
(21) Anmeldenummer: 21177123.3
(22) Anmeldetag: 01.06.2021
(51) Int. Cl.: D06F 39/12, F16B 25/00, F16B 37/02, F16B 37/00, B21D 39/03, F16B 5/04

(54) **VERFAHREN ZUR HERSTELLUNG EINES BEFESTIGUNGSSYSTEMS FÜR EIN HAUSHALTSGERÄT**
METHOD FOR PRODUCING A FASTENING SYSTEM FOR A DOMESTIC APPLIANCE
PROCÉDÉ DE FABRICATION D'UN SYSTÈME DE FIXATION POUR UN APPAREIL ÉLECTROMÉNAGER

(30) Priorität: 24.06.2020 DE 102020116584
(43) Veröffentlichungstag der Anmeldung: 29.12.2021
(73) Patentinhaber: Miele & Cie. KG, 33332 Gütersloh (DE)
(72) Erfinder: Radusin, Darko, 33803 Steinhagen (DE); Höwelhans, Andreas, 33415 Verl (DE)

(56) Entgegenhaltungen:
- EP-B1- 0 588 100
- DE-B4- 102007 009 823
- DE-U1- 202016 001 920
- KR-B1- 101 012 361

## Beschreibung

Verfahren zur Herstellung eines Befestigungssystems für ein Haushaltsgerät Die Erfindung betrifft ein Verfahren zur Herstellung eines Befestigungssystems für ein Haushaltsgerät der im Oberbegriff des Patentanspruchs 1 genannten Art.

Gattungsgemäße Befestigungssysteme sind aus der DE 20 2016 001920 U1, KR 101 012 361 B1, EP 0 588 100 B1 und der DE 10 2007 009823 B4 bekannt.

Befestigungssysteme für Haushaltsgeräte und Verfahren zu deren Herstellung sind aus dem Stand der Technik in einer Vielzahl von Ausführungsformen bereits vorbekannt. Die bekannten Befestigungssysteme für Haushaltsgeräte umfassen dabei eine Blechwand des Haushaltsgeräts und ein Verstärkungsblech, wobei das Verstärkungsblech als ein in einem Demontagezustand des Befestigungssystems von der Blechwand separates Bauteil ausgebildet ist und das Befestigungssystem in einem Montagezustand des Befestigungssystems, in dem die Blechwand und das Verstärkungsblech miteinander verbunden sind, in einem mittels des Verstärkungsblechs verstärkten Bereich des Befestigungssystems mindestens ein die Blechwand und das Verstärkungsblech durchdringendes Durchgangsloch zur kraftübertragenden Aufnahme einer zu dem Durchgangsloch korrespondierenden Schraube zur Befestigung eines Bauteils des Haushaltsgeräts an dem Befestigungssystem aufweist.

Der Erfindung stellt sich somit das Problem, ein Verfahren zur Herstellung eines Befestigungssystems für ein Haushaltsgerät zu verbessern.

Erfindungsgemäß wird dieses Problem durch ein Verfahren zur Herstellung eines Befestigungssystems für ein Haushaltsgerät mit den Merkmalen des Patentanspruchs 1 gelöst.

Haushaltsgerät kann es sich beispielsweise um eine Wäschebehandlungsmaschine wie eine Waschmaschine, einen Wäschetrockner oder einen Waschtrockner handeln. Bei dem mit der Blechwand des Haushaltsgeräts kraftübertragend zu verbindenden Bauteil kann es sich beispielsweise um eine an der Blechwand verschwenkbar angeordnete Tür des Haushaltsgeräts zum Verschließen einer Beladungsöffnung des Haushaltsgeräts handeln.

Jedoch ist die Erfindung auch bei anderen Arten von Haushaltsgeräten sowie bei Geräten für den professionellen Einsatz, also bei Geräten für den gewerblichen Betrieb, vorteilhaft einsetzbar. Das Durchsetzfügen wird auch als Eckold-Durchfügen, Clinchen oder Press-Joining bezeichnet. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Befestigungssystem für ein Haushaltsgerät und ein Verfahren zu dessen Herstellung verbessert sind. Aufgrund der erfindungsgemäßen Ausbildung des Befestigungssystems für ein Haushaltsgerät und des Verfahrens zu dessen Herstellung ist beispielsweise der Herstellungsprozess zur Herstellung des erfindungsgemäßen Befestigungssystems und damit des Haushaltsgeräts sowie der Montageprozess zur kraftübertragenden Verbindung eines Bauteils mit einem Rest des Haushaltsgeräts auf der einen Seite wesentlich vereinfacht. Die Anzahl an erforderlichen Prozessschritten, beispielsweise für die Lagerhaltung, den Transport und bei der Fertigung, lässt sich durch das erfindungsgemäße Verfahren deutlich reduzieren. Dies gilt insbesondere für die bevorzugte Ausführungsform des erfindungsgemäßen Verfahrens. Auf der anderen Seite sind mittels der auf diese Art realisierten kraftübertragenden Verbindung ausreichend hohe Kräfte zwischen dem Bauteil und der mittels des Verstärkungsblechs verstärkten Blechwand des Haushaltsgeräts übertragbar.

Grundsätzlich ist das erfindungsgemäße Befestigungssystem nach Art, Funktionsweise, Material, Dimensionierung und Anordnung in weiten geeigneten Grenzen frei wählbar.

Für die Prozesssicherheit ist es dabei vorteilhaft, dass das Einschraubdrehmoment möglichst gering und das Überdrehmoment möglichst hoch ausgebildet sind, so dass sich ein möglichst großes Verarbeitungsfenster für die Herstellung der kraftübertragenden Verbindung zwischen dem Bauteil auf der einen Seite und dem Befestigungssystem auf der anderen Seite ergibt.

Eine andere vorteilhafte Weiterbildung des erfindungsgemäßen Befestigungssystems sieht vor, dass das Durchgangsloch als ein reines Durchgangsloch ausgebildet ist. Auf diese Weise ist das Durchgangsloch auf konstruktiv und fertigungstechnisch besonders einfache Weise realisiert.

Eine zu der vorgenannten Ausführungsform alternative vorteilhafte Weiterbildung des erfindungsgemäßen Befestigungssystems sieht vor, dass das Durchgangsloch einen Durchzug aufweist, wobei der Durchzug in einem Bereich des Befestigungsblechs undloder in einem Bereich des Verstärkungsblechs angeordnet ist. Hierdurch ist auch bei höheren Anforderungen an die Kraftübertragung zwischen dem Bauteil und dem Befestigungssystem sichergestellt, dass der in das Durchgangsloch eingeschraubten Schraube genügend Gewindegänge zur Kraftübertragung zur Verfügung stehen. Aufgrund des Durchzugs ist es darüber hinaus möglich, die Blechwand und das Verstärkungsblech jeweils mit geringeren Materialstärken auszubilden.

Eine besonders vorteilhafte Weiterbildung des erfindungsgemäßen Befestigungssystems sieht vor, dass das mindestens eine Durchgangsloch in einem des mindestens einen Durchsetzfügepunktes angeordnet ist. Auf diese Weise ist das mindestens eine Durchgangsloch sehr platzsparend und auf fertigungstechnisch besonders einfache Art realisierbar.

Eine vorteilhafte Weiterbildung der vorgenannten Ausführungsform des erfindungsgemäßen Befestigungssystems sieht vor, dass der Durchsetzfügepunkt mit dem Durchgangsloch zumindest vor der Herstellung dieses Durchgangslochs einen Durchsetzfügepunktboden aufweist, wobei das Durchgangsloch in dem Durchsetzfügepunktboden angeordnet ist oder mittels einer Entfernung des Durchsetzfügepunktbodens aus dem Durchsetzfügepunkt ausgebildet ist. Hierdurch ist die Herstellung des Durchgangslochs in dem Durchsetzfügepunkt auf fertigungstechnisch besonders einfache Weise realisiert. Beispielsweise kann der Durchsetzfügepunktboden des Durchsetzfügepunkts auf dem Fachmann an sich bekannte Weise aus dem Durchsetzfügepunkt herausgestanzt oder herausgestochen werden.

Eine weitere vorteilhafte Weiterbildung des erfindungsgemäßen Befestigungssystems sieht vor, dass die Blechwand und das Verstärkungsblech in dem Montagezustand des Befestigungssystems mittels des mindestens einen Durchsetzfügepunktes in dem Durchsetzfügepunkt miteinander flüssigkeitsdicht verbunden sind. Auf diese Art ist sichergestellt, dass beispielsweise Schmutz oder Flüssigkeit nicht in ungewünschter Weise mittels des Durchgangslochs von außen zwischen die Blechwand und das Verstärkungsblech eindringen.

Grundsätzlich ist das erfindungsgemäße Verfahren zur Herstellung eines Befestigungssystems in weiten geeigneten Grenzen frei wählbar.

Das erfindungsgemäße Verfahren sieht vor, dass das Verstärkungsblech bei der Herstellung der Blechwand als Abfallprodukt anfällt und für die Verwendung als Verstärkungsblech für das erfindungsgemäße Befestigungssystem konfiguriert wird. Hierdurch ist zum einen die Zuführung eines weiteren Bauteils zu dem Herstellungsprozess entbehrlich. Entsprechend vereinfacht sich die Lagerhaltung, der Transport und die Fertigung des erfindungsgemäßen Befestigungssystems und damit des Haushaltsgeräts. Zum anderen wird dadurch die Menge an bei der Herstellung anfallenden Abfalls wesentlich reduziert, so dass sich auch die Logistik und die Kosten bei der Entsorgung des Abfalls verringern.

Ein Ausführungsbeispiel der Erfindung ist in den Zeichnungen rein schematisch dargestellt und wird nachfolgend näher beschrieben. Es zeigt
- Figur 1: ein Haushaltsgerät mit einem Ausführungsbeispiel des erfindungsgemäßen Befestigungssystems in einer Frontalansicht,
- Figur 2a: das Ausführungsbeispiel in einer Detailansicht im Bereich eines
- bis 2c: Durchgangslochs, in drei verschiedenen Varianten und
- Figur 3a: das Ausführungsbeispiel in einer Detailansicht im Bereich eines
- und 3b: Durchgangslochs, in einer vierten Variante.

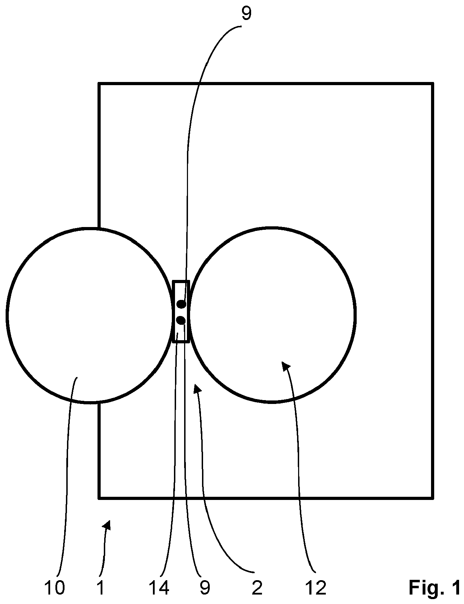

In den Fig. 1 bis 3b ist ein Ausführungsbeispiel des erfindungsgemäßen Befestigungssystems für ein Haushaltsgerät rein exemplarisch dargestellt.

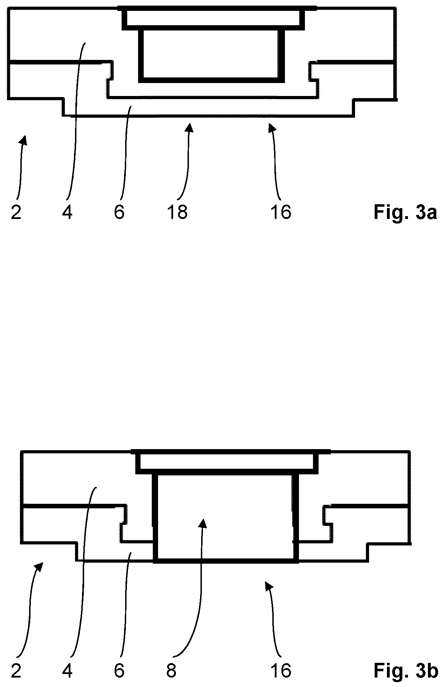

Das Befestigungssystem 2 für ein als eine Waschmaschine für Wäsche ausgebildetes Haushaltsgerät 1 umfasst eine Blechwand 4 des Haushaltsgeräts 1 und ein Verstärkungsblech 6, wobei das Verstärkungsblech 6 als ein in einem nicht dargestellten Demontagezustand des Befestigungssystems 2 von der Blechwand 4 separates Bauteil ausgebildet ist und das Befestigungssystem 2 in einem in den Fig. 1 bis 3b dargestellten Montagezustand des Befestigungssystems 2, in dem die Blechwand 4 und das Verstärkungsblech 6 miteinander verbunden sind, in einem mittels des Verstärkungsblechs 6 verstärkten Bereich des Befestigungssystems 2 zwei die Blechwand 4 und das Verstärkungsblech 6 durchdringende Durchgangslöcher 8 zur kraftübertragenden Aufnahme einer zu dem jeweiligen Durchgangsloch 8 korrespondierenden Schraube 9 zur Befestigung eines Bauteils 10 des Haushaltsgeräts 1 an dem Befestigungssystem 2 aufweist. Die beiden Durchgangslöcher 8 und die zur Befestigung des Bauteils 10 des Haushaltsgeräts 1 an dem Befestigungssystem 2 des Haushaltsgeräts 1 in die Durchgangslöcher 8 eingeschraubten Schrauben 9 sind jeweils zueinander identisch ausgebildet. Das Bauteil 10 ist bei dem vorliegenden Ausführungsbeispiel als eine Tür zum Verschließen einer Beladungsöffnung 12 des Haushaltsgeräts 1 ausgebildet. Die Tür 10 ist mittels eines Beschlagteils 14 der Tür 10 und den beiden Schrauben 9 mit dem Befestigungssystem 2 auf die nachfolgend noch näher erläuterte Weise kraftübertragend verbunden. Die Blechwand 4 und das Verstärkungsblech 6 sind in dem Montagezustand des Befestigungssystems 2 mittels zweier Durchsetzfügepunkte 16 miteinander dauerhaft verbunden. Siehe hierzu die Fig. 3a, die in dem vorgenannten Zusammenhang auch für die erste bis dritte Variante des vorliegenden Ausführungsbeispiels gilt.

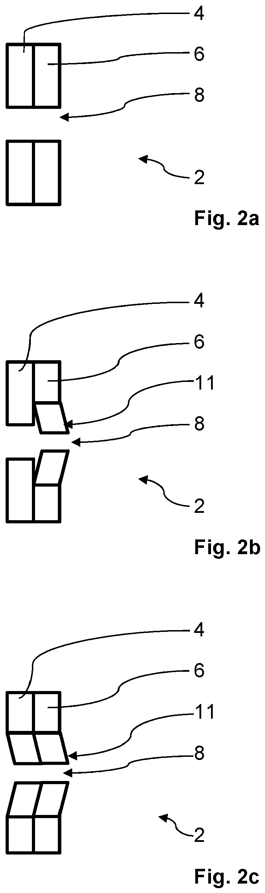

In der ersten Variante des Ausführungsbeispiels gemäß der Fig. 2a sind die Durchgangslöcher 8 als reine Durchgangslöcher ausgebildet. Die Durchgangslöcher 8 weisen jeweils also keinen Durchzug auf. Siehe hierzu die Fig. 2a, in der eines der beiden Durchgangslöcher 8 exemplarisch dargestellt ist.

In der in der Fig. 2b gezeigten zweiten Variante und in der in der Fig. 2c gezeigten dritten Variante des Ausführungsbeispiels weisen die Durchgangslöcher 8 jeweils einen Durchzug 11 auf, wobei der jeweilige Durchzug 11 in einem Bereich des Befestigungsblechs 4 undloder in einem Bereich des Verstärkungsblechs 6 angeordnet ist. Beispielsweise ist der Durchzug 11 der zweiten Variante gemäß der Fig. 2b lediglich in dem Bereich des Verstärkungsblechs 6, also an dem Verstärkungsblech 6, ausgebildet, während das Durchgangsloch 8 im Bereich der Blechwand 4 als ein reines Durchgangsloch ausgebildet ist.

Alternativ dazu sieht die dritte Variante gemäß der Fig. 2c vor, dass der Durchzug 11 sowohl in dem Bereich der Blechwand 4 wie auch in dem Bereich des Verstärkungsblechs 6 angeordnet ist.

Bei dem Ausführungsbeispiel gemäß der drei vorgenannten Varianten sind die Durchgangslöcher 8, mit oder ohne Durchzug 11, separat von den zwei Durchsetzfügepunkten 16, mittels derer die Blechwand 4 und das Verstärkungsblech 6 in dem Montagezustand des Befestigungssystems 2 miteinander dauerhaft verbunden sind, in dem mittels des Verstärkungsblechs 6 verstärkten Bereich des Befestigungssystems 2 angeordnet. Zwecks Kraftübertragung bei dem Einschrauben der Schrauben 9 in die Durchgangslöcher 8 ist es dabei vorteilhaft, wenn die Durchgangslöcher 8 möglichst nahe an den Durchsetzfügepunkten 16 angeordnet sind.

Für die Prozesssicherheit ist es dabei vorteilhaft, dass das Einschraubdrehmoment möglichst gering und das Überdrehmoment möglichst hoch ausgebildet sind, so dass sich ein möglichst großes Verarbeitungsfenster für die Herstellung der kraftübertragenden Verbindung zwischen dem Bauteil 10 auf der einen Seite und dem Befestigungssystem 2 auf der anderen Seite ergibt.

Im Unterschied zu den vorgenannten Varianten des Ausführungsbeispiels ist es gemäß der vierten Variante vorgesehen, dass jeweils eines der Durchgangslöcher 8 in einem der beiden Durchsetzfügepunkte 16 angeordnet ist. Siehe hierzu die Fig. 3a und 3b, in der einer der beiden Durchsetzfügepunkte 16 exemplarisch dargestellt ist. Der andere Durchsetzfügepunkt 16 ist identisch ausgebildet.

Der jeweilige Durchsetzfügepunkt 16 mit dem dazu korrespondierenden Durchgangsloch 8 weist vor der Herstellung dieses Durchgangslochs 8 einen Durchsetzfügepunktboden 18 auf, wobei dieses Durchgangsloch 8 nach einer Entfernung dieses Durchsetzfügepunktbodens 18 aus dem Durchsetzfügepunkt 16 ausgebildet ist. In der Fig. 3a ist der Durchsetzfügepunktboden 18 noch nicht entfernt und das entsprechende Durchgangsloch 8 in dem Durchsetzfügepunkt 16 noch nicht ausgebildet. Zwecks Ausbildung dieses Durchgangslochs 8 wird der Durchsetzfügepunktboden 18 des Durchsetzfügepunktes 16 auf dem Fachmann an sich bekannte Weise ausgestanzt oder ausgestochen.

Nachdem der Durchsetzfügepunktboden 18 des jeweiligen Durchsetzfügepunktes 16 auf die oben erläuterte Weise entfernt worden ist, sind die beiden Durchgangslöcher 8 in dem mittels des Verstärkungsblechs 6 verstärkten Bereich des Befestigungssystems 2 ausgebildet. Siehe hierzu die Fig. 3b. Analog zu den ersten drei Varianten des vorliegenden Ausführungsbeispiels ist es möglich, dass das jeweilige Durchgangsloch 8 bei der vierten Variante ebenfalls einen Durchzug aufweist.

Nachfolgend wird die Funktionsweise des erfindungsgemäßen Befestigungssystems und das erfindungsgemäße Verfahren gemäß dem vorliegenden Ausführungsbeispiel anhand der Fig. 1 bis 3b näher erläutert.

Gemäß dem erfindungsgemäßen Verfahren nach dem vorliegenden Ausführungsbeispiel wird das Befestigungssystem 2 in einem einzigen Herstellungsprozess, nämlich in einem Herstellungsprozess des Haushaltsgeräts 1, hergestellt und in dessen Montagezustand überführt.

Zunächst wird in dem Herstellungsprozess des Haushaltsgeräts 1 auf dem Fachmann an sich bekannte Weise in der Blechwand 4 des Haushaltsgeräts 1 eine kreisrunde Öffnung zur Herstellung der Beladungsöffnung 12 hergestellt. Beispielsweise geschieht dies dadurch, dass die Blechwand 4 an der Stelle der Beladungsöffnung 12 ausgestanzt wird. Dieses aus der Blechwand 4 ausgestanzte Stück der Blechwand 4 wird bei dem erfindungsgemäßen Verfahren gemäß dem vorliegenden Ausführungsbeispiel zur Herstellung des Verstärkungsblechs 6 verwendet. Hierfür wird das vorgenannte Stück der Blechwand 4 entsprechend konfiguriert, also beispielsweise auf die erforderlichen Abmessungen zurechtgeschnitten.

Anschließend wird das Verstärkungsblech 6 auf die oben bereits erläuterte Weise mittels der beiden Durchsetzfügepunkte 16 mit der Blechwand 4, in der nun die Beladungsöffnung 12 angeordnet ist, dauerhaft verbunden. Siehe hierzu die Fig. 3a.

Gemäß der ersten drei Varianten des vorliegenden Ausführungsbeispiels werden dann die beiden Durchgangslöcher 8 auf dem Fachmann bekannte Weise hergestellt. Beispielsweise werden die Durchgangslöcher 8 in den mittels des Verstärkungsblechs 6 verstärkten Bereich des Befestigungssystems 2 eingebohrt, eingestanzt oder eingestochen. Siehe hierzu die Fig. 2a bis 2c.

Gemäß der vierten Variante des vorliegenden Ausführungsbeispiels werden die Durchsetzfügepunktböden 18 der beiden Durchsetzfügepunkte 16 auf die oben bereits erläuterte Weise entfernt, beispielsweise ausgestanzt oder ausgestochen, um so die beiden Durchgangslöcher 8 herzustellen. Siehe hierzu die Fig. 3b.

Das Befestigungssystem 2 des Haushaltsgeräts 1 kann nun zur kraftübertragenden Verbindung der Tür 10 mit dem Befestigungssystem 2 verwendet werden. Hierfür wird das Beschlagteil 14 der Tür 10, das zwei zu den beiden Durchgangslöchern 8 des Befestigungssystems 2 in dem Beschlagteil 14 korrespondierend ausgebildete Durchgangslöcher aufweist, derart über den Durchgangslöchern 8 des Befestigungssystems 2 positioniert, dass ein Monteur die beiden Schrauben 9 durch die nicht dargestellten Durchgangslöcher des Beschlagteils 14 in die Durchgangslöcher 8 des Befestigungssystems 2 einschrauben kann. Die Durchgangslöcher des Beschlagteils 14 sind dafür im Vergleich zu den Schrauben 9 mit Übermaß ausgebildet, während die Durchgangslöcher 8 im Vergleich zu den Schrauben 9 mit Untermaß ausgebildet sind, so dass die Schrauben 9 in die Durchgangslöcher 8 zur Ausbildung eines Gewindes in dem jeweiligen Durchgangsloch 8 in die Blechwand 4 und das Verstärkungsblech 6 des Befestigungssystems 2 hineinschneiden.

Das Einschrauben der Schrauben 9 kann dabei manuell, halbautomatisch oder vollautomatisch erfolgen. In die Durchgangslöcher des Befestigungssystems können vorab auch auf dem Fachmann bekannte Weise Gewinde für die Schrauben eingeschnitten werden.

Die Erfindung ist nicht auf das vorliegende Ausführungsbeispiel beschränkt. Beispielsweise ist die Erfindung auch bei andersartigen Haushaltsgeräten sowie bei gewerblichen Geräten, also bei Geräten für den professionellen Einsatz, vorteilhaft einsetzbar. Das Bauteil des Haushaltsgeräts, das mittels des erfindungsgemäßen Befestigungssystems an dem Rest des Haushaltsgeräts kraftübertragend befestigt wird, muss nicht zwingend als eine Tür für eine Beladungsöffnung oder dergleichen ausgebildet sein. Entsprechend ist die Erfindung bei einer Vielzahl von voneinander verschiedenen Anwendungsfällen anwendbar und für die Anforderungen des jeweiligen Einzelfalls konfigurierbar.

## Patentansprüche

1. Verfahren zur Herstellung eines Befestigungssystems (2) für ein Haushaltsgerät (1), umfassend eine Blechwand (4) des Haushaltsgeräts (1) und ein Verstärkungsblech (6), wobei das Verstärkungsblech (6) als ein in einem Demontagezustand des Befestigungssystems (2) von der Blechwand (4) separates Bauteil ausgebildet ist und das Befestigungssystem (2) in einem Montagezustand des Befestigungssystems (2), in dem die Blechwand (4) und das Verstärkungsblech (6) miteinander verbunden sind, in einem mittels des Verstärkungsblechs (6) verstärkten Bereich des Befestigungssystems (2) mindestens ein die Blechwand (4) und das Verstärkungsblech (6) durchdringendes Durchgangsloch (8) zur kraftübertragenden Aufnahme einer zu dem Durchgangsloch (8) korrespondierenden Schraube (9) zur Befestigung eines Bauteils (10) des Haushaltsgeräts (1) an dem Befestigungssystem (2) aufweist, und wobei die Blechwand (4) und das Verstärkungsblech (6) in dem Montagezustand des Befestigungssystems (2) mittels mindestens eines Durchsetzfügepunktes (16) miteinander dauerhaft verbunden sind, und wobei das Befestigungssystem (2) in einem einzigen Herstellungsprozess, bevorzugt in einem Herstellungsprozess des Haushaltsgeräts (1), hergestellt und in dessen Montagezustand überführt wird,
**dadurch gekennzeichnet,**
**dass** das Verstärkungsblech (6) bei der Herstellung der Blechwand (4) als Abfallprodukt anfällt und für die Verwendung als Verstärkungsblech (6) für das Befestigungssystem (2) konfiguriert wird.

2. Verfahren nach Anspruch 1, **dadurch gekennzeichnet, dass** das Durchgangsloch (8) einen Durchzug (11) aufweist, wobei der Durchzug (11) in einem Bereich des Befestigungsblechs (4) und/oder in einem Bereich des Verstärkungsblechs (6) angeordnet ist.

3. Verfahren nach einem der Ansprüche 1 bis 2,
**dadurch gekennzeichnet, dass** das
mindestens eine Durchgangsloch (8) in einem des mindestens einen Durchsetzfügepunktes (16) angeordnet ist.

4. Verfahren nach Anspruch 3,
**dadurch gekennzeichnet, dass** der Durchsetzfügepunkt (16)
mit dem Durchgangsloch (8) zumindest vor der Herstellung dieses Durchgangslochs (8) einen Durchsetzfügepunktboden (18) aufweist, wobei das Durchgangsloch (8) in dem Durchsetzfügepunktboden angeordnet ist oder mittels einer Entfernung des Durchsetzfügepunktbodens (18) aus dem Durchsetzfügepunkt (16) ausgebildet ist.

5. Verfahren nach einem der Ansprüche 1 bis 4,
**dadurch gekennzeichnet, dass** die
Blechwand (4) und das Verstärkungsblech (6) in dem Montagezustand des Befestigungssystems (2) mittels des mindestens einen Durchsetzfügepunktes (16) in dem Durchsetzfügepunkt (16) miteinander flüssigkeitsdicht verbunden sind.

## Claims

1. Method for producing a fastening system (2) for a domestic appliance (1), comprising a sheet metal wall (4) of the domestic appliance (1) and a reinforcing plate (6), the reinforcing plate (6) being designed as a component which is separate from the sheet metal wall (4) in a disassembled state of the fastening system (2), and the fastening system (2) comprising, in an assembled state of the fastening system (2), in which the sheet metal wall (4) and the reinforcing plate (6) are connected to one another, at least one through-hole (8) in a region of the fastening system (2) that is reinforced by means of the reinforcing plate (6), which through-hole penetrates the sheet metal wall (4) and the reinforcing plate (6) and is intended for force-transmitting reception of a screw (9) corresponding to the through-hole (8) for fastening a component (10) of the domestic appliance (1) to the fastening system (2), and the sheet metal wall (4) and the reinforcing plate (6) being permanently connected to one another in the assembled state of the fastening system (2) by means of at least one clinching point (16), and the fastening system (2) being produced in a single production process, preferably in a production process of the domestic appliance (1), and transferred to its assembled state,
**characterised in that**
the reinforcing plate (6) is produced as a by-product during the production of the sheet wall (4) and is configured for use as a reinforcing plate (6) for the fastening system (2).

2. Method according to claim 1, **characterised in that** the through-hole (8) has a pull-through (11), the pull-through (11) being arranged in a region of the fastening plate (4) and/or in a region of the reinforcing plate (6).

3. Method according to either claim 1 or claim 2, **characterised in that** the at least one through-hole (8) is arranged in one of the at least one clinching points (16).

4. Method according to claim 3, **characterised in that** the clinching point (16) having the through-hole (8) has a clinching point base (18), at least before the production of this through-hole (8), the through-hole (8) being arranged in the clinching point base or being formed by means of a removal of the clinching point base (18) from the clinching point (16).

5. Method according to any of claims 1 to 4, **characterised in that,** by means of the at least one clinching point (16), the sheet metal wall (4) and the reinforcing sheet (6) are connected to one another in the clinching point (16) in a liquid-tight manner in the assembled state of the fastening system (2).

## Revendications

1. Procédé permettant la fabrication d'un système de fixation (2) pour un appareil électroménager (1), comprenant une paroi en tôle (4) de l'appareil électroménager (1) et une tôle de renforcement (6), dans lequel la tôle de renforcement (6) est conçue comme un composant séparé de la paroi en tôle (4) dans un état de démontage du système de fixation (2) et, dans un état de montage du système de fixation (2) dans lequel la paroi en tôle (4) et la tôle de renforcement (6) sont reliées entre elles, le système de fixation (2) présente, dans une zone du système de fixation (2) renforcée au moyen de la tôle de renforcement (6), au moins un trou traversant (8) traversant la paroi en tôle (4) et la tôle de renforcement (6) pour la réception, de manière à transmettre une force, d'une vis (9) correspondant au trou traversant (8) pour la fixation d'un composant (10) de l'appareil électroménager (1) au système de fixation (2), et dans lequel la paroi en tôle (4) et la tôle de renforcement (6) sont reliées entre elles de manière durable au moyen d'au moins un point de clinchage (16) dans l'état de montage du système de fixation (2), et dans lequel le système de fixation (2) est fabriqué lors d'un seul processus de fabrication, de préférence lors d'un processus de fabrication de l'appareil électroménager (1), et est transféré dans son état de montage,
**caractérisé en ce que**
la tôle de renforcement (6) est obtenue comme sous-produit lors de la fabrication de la paroi en tôle (4) et est conçue pour être utilisée comme tôle de renforcement (6) pour le système de fixation (2).

2. Procédé selon la revendication 1, **caractérisé en ce que** le trou traversant (8) présente un passage (11), dans lequel le passage (11) est disposé dans une zone de la tôle de fixation (4) et/ou dans une zone de la tôle de renforcement (6).

3. Procédé selon l'une des revendications 1 à 2, **caractérisé en ce que** l'au moins un trou traversant (8) est disposé dans l'un de l'au moins un point de clinchage (16).

4. Procédé selon la revendication 3, **caractérisé en ce que** le point de clinchage (16) comportant le trou traversant (8) présente, au moins avant la fabrication dudit trou traversant (8), un fond de point de clinchage (18), dans lequel le trou traversant (8) est disposé dans le fond de point de clinchage ou est réalisé au moyen d'un retrait du fond de point de clinchage (18) du point de clinchage (16).

5. Procédé selon l'une des revendications 1 à 4, **caractérisé en ce que,** dans l'état de montage du système de fixation (2), la paroi en tôle (4) et la tôle de renforcement (6) sont reliées entre elles de manière étanche aux liquides dans le point de clinchage (16) au moyen de l'au moins un point de clinchage (16).
